# EUROPEAN PATENT APPLICATION

(11) **EP 3 040 918 A1**
(43) Date of publication of application: **06.07.2016**
(21) Application number: 14200423.3
(22) Date of filing: 29.12.2014
(51) Int. Cl.: G06Q 10/08, H04W 4/02, H04W 64/00, H04W 4/00

(54) **System for locating of lost items**

(71) Applicant: Nokia Solutions and Networks Oy, 02610 Espoo (FI)
(72) Inventor: Farkas, Lorant, 1213 Budapest (HU)
(74) Representative: Borgström, Markus

(57) **Abstract**

A lost item search system (100) is provided, according to an embodiment including a portable device (102), a server device (104) and a remote device 106. The portable device (102) which may be e.g. a mobile phone, comprises: a device control unit (108) configured for receiving an identifier (109), the identifier (109) being received from a remote device (106), and the identifier (109) being indicative of an identity of the remote device (106); and the device control unit (108) being further configured for outputting an information element (112); the information element (112) being indicative of the identity of the remote device (106); and the information element (112) being indicative of the geographical location of the remote device (106).

## Description

### Field of Invention

The present invention relates to the field of systems which assist in the locating of lost items.

### BACKGROUND

From practice it is known, proximity sensors are known which help in finding misplaced items. The sensor may be put into a bag or may be attached to an item which can be potentially lost, e.g. a key. After pairing the sensor with a mobile phone, an alert is triggered whenever the connection between the sensor and the phone is lost or the signal is weak. If several sensors are used, the phone may show a notification about which sensor was triggered.

### SUMMARY

However, in some situations the mobile phone may be not aware of leaving behind the sensor, e.g. after the battery depletion of the mobile phone sensor and the mobile phone might have different motion patterns without being aware of each other, therefore the last known location of the sensor (known at the time of the battery depletion of the phone) might not be accurate any more.

In view of the above-described situation, there exists a need for an improved technique that enables to provide a system which provides for a reliable locating of lost items, while substantially avoiding or at least reducing one or more of the above-identified problems.

This need may be met by the subject matter according to the independent claims. Advantageous embodiments of the herein disclosed subject matter are described by the dependent claims.

According to an embodiment of a first aspect of the herein disclosed subject matter there is provided a portable device comprising: a device control unit configured for receiving an identifier, the identifier being received from a remote device, and the identifier being indicative of an identity of the remote device; and the device control unit being further configured for outputting an information element; the information element being indicative of the identity of the remote device; and the information element being indicative of a geographical location of the remote device.

This aspect is based on the idea that by receiving an identifier from a remote device and outputting an information element which is indicative of the identity of the remote device and of a geographical location of the remote device allows to locate the remote device with any portable device that is configured (e.g. by suitable programming the portable device) for receiving the identifier from the remote device. Such a portable device may be e.g. a mobile phone with proximity networking capabilities (e.g. via Bluetooth or NFC).

According to an embodiment, the identifier is an information element provided by the remote device and being indicative of an identity of the remote device. According to an embodiment, the identifier is identical to the information element that is outputted by the device control unit of the portable device and which is indicative of the identity of the remote device

According to an embodiment, the geographical location of the remote device is considered to be the geographical location of the portable device. This is in particular true in cases, where short-range communication methods (such as bluetooth, NFC, WIFI etc.) are used for receiving the identifier by the device control unit of the portable device. In other words, according to an embodiment the geographical location of the portable device is - within a reasonable uncertainty - identical to the location of the remote device. Hence, in an embodiment, the information element being indicative of the geographical location of the remote device is an information element being indicative of the geographical location of the portable device.

The information element, being indicative of the geographical location of the remote device may include a representation of the geographical location of the remote device or, in another embodiment, may include data from which the geographical location of the portable device can be deduced, such as an identifier of the portable device together with a timestamp. According to an embodiment, the geographical location of the portable device is identified by a controller of a cellular network to which the portable device is connected at the time indicated by the timestamp. In such a case, the server device may retrieve the geographical location of the portable device from the controller of the cellular network. Such determination of the geographical location within a cellular network is well known and is not further described herein. Further, as also known, the geographical location of the portable device may also be determined from WIFI networks being within the reach of the portable device or from the network address associated with the portable device. Any such known method for the determination of the geographical location of the portable device may be used to allow the device control unit generate the information element being indicative of the geographical location of the remote device (or, in a respective embodiment). According to an embodiment the device control unit may retrieve the indication of the geographical location of the portable device from a third entity, e.g. a controller of a cellular network. According to a further embodiment, the device control unit may determine the indication of the geographical location of the portable device based on data available to the device control unit. According to a further embodiment, the device control unit may receive the geographical location of the remote device from the remote device itself, e.g. together with the identifier. In the latter case, it should be understood that in accordance with an embodiment the remote device may be configured to determine information indicative of the geographical location of the remote device. Generally, the determination of information indicative of the geographical location of the remote device can be done in an analogous way as described above with regard to the portable device and the determination of the information element indicative of the geographical location of the portable device.

According to an embodiment, a portable device is an electronic device having the built-in capacity of establishing a wireless connection with a remote device. In turn, the remote device is capable of establishing the wireless connection with the portable device. For example, according to an embodiment the portable device may be a mobile phone, a game console, a tablet, etc. Further, a remote device may be a tag, a key chain, etc.

According to an embodiment, the device control unit of the portable device is configured for receiving an identifier from an arbitrary remote device. For example, according to an embodiment the device control unit of the portable device is configured for receiving any identifier provided by an arbitrary remote device as long as the identifier is provided by the remote device in an appropriate format which is recognizable by the device control unit of the portable device. For example, according to an embodiment, the portable device comprises a connection interface for establishing a wireless connection with the remote device. For example, according to an embodiment, the connection interface is a Bluetooth interface or a near field communication (NFC) interface. According to an embodiment the portable device is configured for receiving the identifier from the remote device via a Bluetooth interface, a near field communication (NFC) interface, etc. According to an embodiment, the remote device also comprises a connection interface operating as counterpart to the connection interface of the portable device. In other words, in accordance with an embodiment, the connection interface of the remote device and that the connection interface of the portable device are configured to establish a wireless connection between the portable device and the remote device in order to allow the transfer of the identifier from the remote device to the portable device. According to an embodiment, this transfer may additionally also comprise a location information indicative of a geographical location of the remote device.

According to an embodiment, the portable device further comprises a network interface by which the portable device is connectable to a network; wherein outputting the information element is an outputting of the information element over the network. For example, according to an embodiment, the network interface is an interface connectable a wireless network. According to a further embodiment, the network interface is an interface connectable to a wired network. A wireless network may be e.g. a cellular network, a Wi-Fi network, etc. In particular a wireless network may be an IEEE 802.11 network, a network defined by the 3rd generation partnership project (3GPP), etc. A wired network may be e.g. a local area network, a metropolitan area network, a wide area network or a global elite area network, etc.

According to an embodiment, outputting the information element is an outputting of the information element to a server device.

According to an embodiment, the information element comprises location information indicative of the geographical location of the remote device. According to a further embodiment, the portable device further comprises a location determination unit configured for determining the geographical location information. According to an embodiment, the location determination unit is a global positioning system (GPS) unit. According to a further embodiment, the location determination unit is configured for using a wireless network for determination of the geographical location information. For example, in accordance with one of the aforementioned embodiments of a wireless network, the location determination unit may use the data available from a cellular network, to which the portable device is connected, for determining the geographical location information. In another embodiment, the location determination unit may use the data available from a Wi-Fi network, to which the portable device is connected, for determining the geographical location information.

According to a further embodiment, the portable device further comprises an encryption unit configured for encrypting the information element to thereby provide the information element in encrypted form; wherein outputting the information element is outputting the information element in the encrypted form. Any suitable encryption method may be used by the encryption unit (and the encryption unit may be respectively configured to do so) for encrypting the information element. In particular, according to an embodiment, encrypting the information element may include encrypting the information element and transmitting the encrypted information element via a non-secured connection to the server device. According to a further embodiment, encrypting the information element may include transmitting the information element with a secure protocol, such as hypertext transfer protocol secure (HTTPS).

According to a further embodiment, the device control unit is configured for receiving a list of lost remote devices; the portable device comprises a storage device for storing the list of lost remote devices; and the device control unit is further configured for outputting the information element only if the remote device is a lost remote device (e.g. if it is included in the list of lost remote devices). According to such an embodiment, the traffic produced by the remote device may be reduced. For example, if an owner of the remote device carries the remote device in his or her bag past a portable device of a third person, in the above mentioned embodiment the information element will not be output by the device control unit if the remote device, from which the identifier is received, is not included in the list of remote devices stored in the storage device. Only after the owner of the portable device has registered his remote device as lost remote device (leading, according to an embodiment, to the respective entry in the list of lost remote devices which is provided to portable devices), the information element is output by the device control unit in response to receiving the identifier of the remote device by the device control unit. According to an embodiment, the list of remote devices is a list of identifiers of lost remote devices. Further, it is noted that the term "a list of" is not limited to a specific format or sequence of e.g. the lost remote devices, but rather is to be interpreted, in a broad embodiment, as "a number of".

According to a further embodiment, the device control unit is configured for receiving from the remote device a lost device information element indicating that the remote device is lost by its owner. Although this embodiment, the lost device information element allows the portable device to determine as to whether the remote device has been lost by its owner. This is in particular possible even if no list of lost remote devices has been received by the portable device. Further, the device control unit may be configured for outputting the information element only if the remote device is a lost remote device (e.g. if the remote device provides the lost device information element to the device control unit). Hence, also this embodiment allows traffic reduction as described above with regard to the list of lost remote devices.

According to an embodiment, the remote device determines that it has been lost if the remote device cannot connect to an owner's portable device with which the remote device has been paired by the owner.

According to a further embodiment, the device control unit is configured for receiving owner contact information of an owner of the remote device; the device control unit being configured for contacting the owner of the remote device by using the contact information. The contact information may be at least one of a telephone number, and email address, a Skype identifier, a Facebook account, a twitter account, etc. For example, according to an embodiment the device control unit may be configured for providing to the user of the remote device an activation element (e.g. on a touchscreen of the portable device), the activation of which contacts the owner of the remote device. For example, according to an embodiment, contacting the owner of the remote device may include giving the owner of the remote device a call on a predefined telephone number. According to an embodiment to the predefined telephone number is provided to the portable device in conjunction with providing the identifier to the portable device. For example, the predefined telephone number may be provided to the portable device by the remote device. According to a further embodiment, the predefined telephone number may be provided to the portable device by a server device after (or in the response to) the portable device has provided the identifier of the remote device to the server device.

According to further embodiments of the first aspect, the portable device is configured for providing the functionality of one or more of the herein disclosed embodiments and/or for providing the functionality as required by one or more of the herein disclosed embodiments, in particular of the embodiments of the second, third, fourth, fifth, sixth, seventh, eighth, ninth, tenth and eleventh aspect disclosed herein.

According to an embodiment of a second aspect of the herein disclosed subject matter there is provided a server device, the server device comprising: a server control unit; the server control unit being configured for receiving an information element from a portable device; the information element being indicative of the identity of a remote device; and the information element being indicative of a geographical location of the remote device; the server control unit being further configured for identifying an owner of the remote device by means of the information element and providing to the owner of the remote device the geographical location of the remote device.

Providing a server device which receives the information element from the portable device and which provides to an owner of the remote device the geographical location of the remote device indicated by the information element may provide the geographical location of the remote device to its owner even if the mobile phone of the owner of the remote device was not able to detect the occurrence of the separation of the portable device and the remote device (and the location where this happened).

Regarding the identification of an owner of the remote device, numerous possibilities exist. For example, according to an embodiment a shop sells the remote device and as part of the selling procedure a link between a subscriber identity of the portable device (e.g. as defined in a subscriber identity module - SIM) and the identifier (which is indicative of the remote device) is written in a database that is part of the server control unit. Afterwards the server control unit is able to identify the owner of the remote device by looking up in the database which subscriber belongs to this remote device (e.g. which subscriber belongs to the remote device identified by the information element).

According to an embodiment, the server control unit of the server device is configured for receiving from the portable device a finder identification information indicative of the user of the portable device and/or indicative of the portable device; the server device further comprising a server storage device; and the server control unit configured for storing the finder identification information in the server storage device, optionally together with finding information associated with the finder identification information, the finding information being based on the information element.

Storing a finder identification information allows a finder reward, e.g. an incentive for honest finders. According to an embodiment, the server control unit is configured for ranking the finder identification information (and hence the user of the portable device, the portable device itself, or both) depending on the information element. For example, server control unit may be configured for performing the ranking of finders depending on the number of information elements (e.g. reported locations of found remote devices) provided to the server control unit within a predetermined time period.

According to a further embodiment, the server control unit is configured for authenticating an owner of the portable device and a, after successful authentication of the owner of the portable device, providing to the owner of the remote device the geographical location of the remote device.

According to further embodiments of the second aspect, the server device is configured for providing the functionality of one or more of the herein disclosed embodiments and/or for providing the functionality as required by one or more of the herein disclosed embodiments, in particular of the embodiments of the first, third, fourth, fifth, sixth, seventh, eighth, ninth, tenth and eleventh aspect disclosed herein.

According to an embodiment of a third aspect of the herein disclosed subject matter a remote device is provided, the remote device comprising: a transmit unit configured for sending an identifier to a portable device, and the identifier being indicative of an identity of the remote device; the transmit unit being configured for sending the identifier to the portable device without authenticating the portable device.

According to an embodiment, the term "without authenticating an entity" (as used herein (in particular with regard to the first aspect and the third aspect where the entity is the remote device and the portable device, respectively) means "without performing a verification of an identity of the entity". Such an embodiment is easily implemented because the respective action which is to be performed without authenticating an entity is simply implemented without a step in which the entity is authenticated.

According to embodiments of the third aspect, the method is configured for providing the functionality of one or more of the herein disclosed embodiments and/or for providing the functionality as required by one or more of the herein disclosed embodiments, in particular of the embodiments of the first, second, fourth, fifth, sixth, seventh, eighth, ninth, tenth and eleventh aspect disclosed herein.

According to an embodiment of a fourth aspect of the herein disclosed subject matter there is provided a method of operating a portable device, the method comprising:
receiving from a remote device an identifier, the identifier being indicative of an identity of the remote device; and outputting an information element; the information element being indicative of the identity of the remote device; and the information element being indicative of a geographical location of the remote device.

According to embodiments of the fourth aspect, the method is configured for providing the functionality of one or more of the herein disclosed embodiments and/or for providing the functionality as required by one or more of the herein disclosed embodiments, in particular of the embodiments of the first, second, third, fifth, sixth, seventh, eighth, ninth, tenth and eleventh aspect disclosed herein.

According to an embodiment of a fifth aspect of the herein disclosed subject matter there is provided a method of operating a server device, the method comprising: receiving an information element from a portable device; the information element being indicative of the identity of the remote device; and the information element being indicative of a geographical location of the remote device; identifying an owner of the remote device and providing the geographical location of the remote device to the owner of the remote device.

According to embodiments of the fifth aspect, the method is configured for providing the functionality of one or more of the herein disclosed embodiments and/or for providing the functionality as required by one or more of the herein disclosed embodiments, in particular of the embodiments of the first, second, third, fourth, sixth, seventh, eighth, ninth, tenth and eleventh aspect disclosed herein.

According to an embodiment of a sixth aspect of the herein disclosed subject matter, a method of operating a remote device is provided, the method comprising: sending an identifier to a portable device without authenticating the portable device, the identifier being indicative of an identity of the remote device.

According to embodiments of the sixth aspect, the method is configured for providing the functionality of one or more of the herein disclosed embodiments and/or for providing the functionality as required by one or more of the herein disclosed embodiments, in particular of the embodiments of the first, second, third, fourth, fifth, seventh, eighth, ninth, tenth and eleventh aspect disclosed herein.

According to an embodiment of a seventh aspect a computer program product in the form of a program element or a computer readable medium is provided, the computer program product being configured for, when executed on a processor device, performing the method according to the fourth aspect or an embodiment thereof.

According to embodiments of the seventh aspect, the computer program product is configured for providing the functionality of one or more of the herein disclosed embodiments and/or for providing the functionality as required by one or more of the herein disclosed embodiments, in particular of the embodiments of the first, second, third, fourth, fifth, sixth, eighth, ninth, tenth and eleventh aspect disclosed herein.

According to an embodiment of an eighth aspect a computer program product in the form of a program element or a computer readable medium is provided, the computer program product being configured for, when executed on a processor device, performing the method according to the fifth aspect or an embodiment thereof.

According to embodiments of the eighth aspect, the computer program product is configured for providing the functionality of one or more of the herein disclosed embodiments and/or for providing the functionality as required by one or more of the herein disclosed embodiments, in particular of the embodiments of the first, second, third, fourth, fifth, sixth, seventh, ninth, tenth and eleventh aspect disclosed herein.

According to an embodiment of a ninth aspect a computer program product in the form of a program element or a computer readable medium is provided, the computer program product being configured for, when executed on a processor device, performing the method according to the sixth aspect or an embodiment thereof.

According to embodiments of the ninth aspect, the computer program product is configured for providing the functionality of one or more of the herein disclosed embodiments and/or for providing the functionality as required by one or more of the herein disclosed embodiments, in particular of the embodiments of the first, second, third, fourth, fifth, sixth, seventh, eighth, tenth and eleventh aspect disclosed herein.

According to an embodiment of a tenth aspect a lost item search system is provided, the lost item search system comprising a portable device according to the first aspect or an embodiment thereof; a server device according to the second aspect or and embodiment thereof.

According to an embodiment of the tenth aspect, the lost item search system further comprises a remote device according to the third aspect or an embodiment thereof.

According to embodiments of the tenth aspect, the lost item search system is configured for providing the functionality of one or more of the herein disclosed embodiments and/or for providing the functionality as required by one or more of the herein disclosed embodiments, in particular of the embodiments of the first, second, third, fourth, fifth, sixth, seventh, eighth, ninth, and eleventh aspect disclosed herein.

According to an embodiment of an eleventh aspect of the herein disclosed subject matter, a method of operating a lost item search system is provided, the method comprising: operating a portable device according to the fourth aspect or and embodiment thereof; operating a server device according to the fifth aspect or and embodiment thereof.

According to an embodiment of the eleventh aspect, the method further comprises operating a remote device according to the sixth aspect or and embodiment thereof.

According to embodiments of the eleventh aspect, the method is configured for providing the functionality of one or more of the herein disclosed embodiments and/or for providing the functionality as required by one or more of the herein disclosed embodiments, in particular of the embodiments of the first, second, third, fourth, fifth, sixth, seventh, eighth, ninth, and tenth aspect disclosed herein.

In the foregoing and in the following, exemplary embodiments of the herein disclosed subject matter are described, any number and any combination of which may be realized in an implementation of the herein disclosed subject matter.

As used herein, reference to a computer program is intended to be equivalent to a reference to a program element and/or a computer readable medium containing instructions for controlling a computer system to effect and/or coordinate the performance of an above described method.

The instructions may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable processor device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a portable device, a server device or a remote device and respective methods and computer program products. It has to be pointed out that of course any combination of features relating to different aspects of the herein disclosed subject matter is also possible. In particular, some features have been or will be described with reference to apparatus type embodiments whereas other features have been or will be described with reference to method type embodiments. However, a person skilled in the art will gather from the above and the following description that, unless other notified, in addition to any combination of features belonging to one aspect also any combination of features relating to different aspects or embodiments, for example even combinations of features of apparatus type embodiments and features of the method type embodiments are considered to be disclosed with this application. In this regard, it should be understood that any method feature derivable from a corresponding explicitly disclosed device feature should be based on the respective function of the device feature and should not be considered as being limited to device specific elements disclosed in conjunction with the device feature.

The aspects and embodiments defined above and further aspects and embodiments of the herein disclosed subject matter are apparent from the examples to be described hereinafter and are explained with reference to the drawings, but to which the invention is not limited.

### BRIEF DESCRIPTION OF THE DRAWINGS

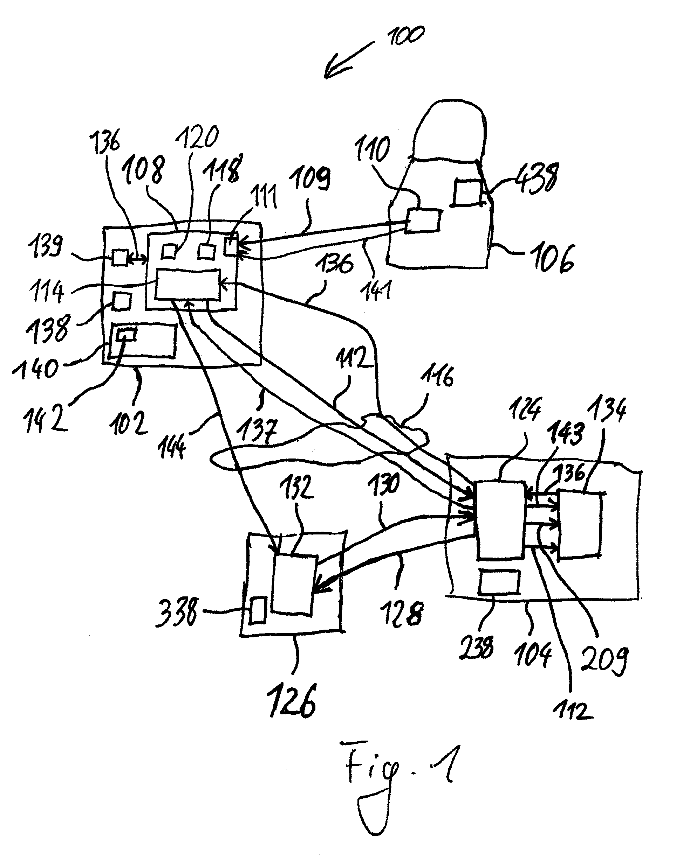

Figure 1 shows a lost item search system according to embodiments of the herein disclosed subject matter.

### DETAILED DESCRIPTION

The illustration in the drawings is schematic. It is noted that in different figures, similar or identical elements are provided with the same reference signs or with reference signs which are different from the corresponding reference signs only within the first digit. Accordingly, the description of similar or identical features is not repeated in the description of subsequent figures in order to avoid unnecessary repetitions. However, it should be understood that the description of these features in the preceding figures is also valid for the subsequent figures unless noted otherwise.

Figure 1 shows a lost item search system 100 according to embodiments of the herein disclosed subject matter.

In accordance with an embodiment, the lost item search system 100 comprises a portable device 102, a server device 104 and a remote device 106. Each of the devices 102, 104, 106 defines an aspect of the herein disclosed subject matter and these devices work in concert to provide a lost item search system 100 as disclosed herein.

In accordance with an embodiment, the remote device 106 (which may be provided in the form of a tag) is intended to be associated with an article of the owner of the remote device 106. For example, the article may be a bag or a key ring of the owner and the remote device may be associated there with e.g. by putting the remote device into the back or attaching the remote device to the key ring. With the functionality of the lost item search system 100 described herein, it is possible for the owner of the remote device 106 to receive information about the geographical location of the remote device 106 and hence of the article associated there with which is quite helpful in case the article, with which the remote device is associated, is lost by the owner.

In the following, exemplary individual devices 102, 104, 106 of the lost item search system 100, employing numerous embodiments of the herein disclosed subject matter, are described in detail.

The portable device 102 comprises a device control unit 108 which is configured for receiving an identifier 109 from a transmit unit 110 of the remote device 106. The sending of the identifier 109 by the transmit unit 110 may employ any wireless technology which is suitable for transmitting the identifier 109 from the transmit unit 110 to the device control unit 108. In particular, the sending of the identifier 109 by the transmit unit 110 may include the establishing of a communication connection between the transmit unit 110 and the device control unit 108 and may involve a handshake of the two devices 108, 110, depending on the protocol used. According to an embodiment, the control unit includes a bluetooth device 111 for establishing the communication connection and receiving the identifier 109. According to another embodiment, sending the identifier 109 by the transmit unit 110 may be a broadcast transmission. In a broadcast transmission, the transmit unit 110 may not know the recipients of the identifier 109. Anyway, in accordance with an embodiment the remote device 106 (more particularly, it's transmit unit 110) is the sending the identifier 109 without authenticating the recipient i.e., in the described example, the portable device 102. In this way, the remote device 106 is a capable of sending its identifier 109 to any portable device 102 which is capable of receiving the identifier 109, e.g. which is configured to employ the same communication technology as the remote device 106.

On the other hand, in accordance with an embodiment also in the portable device 102 is configured for receiving the identifier 109 without authenticating the remote device 106. According to an embodiment, the remote device 106 is configured for sending the identifier 109 to the portable device 102 without any user interaction. Likewise, according to an embodiment the portable device 102 is configured for receiving the identifier 109 without any user interaction. This allows the portable device 102 to become aware of the remote device 106 (and get its identity) without any user interaction necessary on the portable device 102.

In accordance with an embodiment, the device control unit 108 is further configured for outputting an information element 112, e.g., in an embodiment, to the server device 104. According to an embodiment, the information element 112 is indicative of the identity 109 of the remote device 106 and of the geographical location of the remote device 106. In other words, according to an embodiment the information element 112 enables a recipient, e.g. the server device 104, to determine the identity of the remote device 106 and also the geographical location of the remote device 106 on the basis of the information element 112.

In accordance with an embodiment, the information element 112 comprises location information indicative of the geographical location of the remote device 106. In an embodiment, and in particular because the determination of a geographical location is always accompanied with a certain determination error, the geographical location of the remote device 106 is considered to be identical to the geographical location of the portable device 102. Usually, this is true at least for the purpose of finding the lost remote device 106 (together with the associated article of the owner). Anyway, as long as the portable device 102 is located close to the remote device 106 (e.g. is within the range of short-range wireless communication techniques such as Bluetooth or NFC), the geographical location of the portable device 102 is geographical location information and that is indicative of the location of the remote device 106.

According to an embodiment, the portable device 102 comprises a location determination unit 118 configured for determining the geographical location information which is indicative of the geographical location of the remote device 106. In particular, in an embodiment the location determination unit 118 is configured for determining the geographical location of the portable device 102 as a geographical location information which is indicative of the geographical location of the remote device 106.

According to an embodiment, the portable device 102 comprises a network interface 114 by which the portable device 102 can be connected to a network 116. Hence, in an embodiment, the device control unit 108 is configured for outputting the information element over the network 116. The network 116 may be e.g. a wireless local area network (WLAN) and the network interface 114 may be e.g. a Wi-Fi interface by which the portable device 102 is connectable to the network 116. However, other types of networks and network interfaces are also possible. Further, the network 116 may provide access Internet thus allowing the information element to be transmitted to any recipient which itself is also connected to the Internet.

According to a further embodiment, the portable device 102 comprises an encryption unit 120 configured for encrypting the information element 112 to thereby provide the information element 112 in an encrypted form. In such an embodiment, the information element 112 is outputted over the network 116 in the encrypted form. Many encryption methods are known for providing the information element 112 to a recipient in an encrypted form and any such method may be used in conjunction with the herein disclosed subject matter.

In accordance with an embodiment, the server device 104 comprises a server control unit 124. According to an embodiment, the server control unit 124 is configured for receiving the information element 112 from the portable device 102.

In accordance with an embodiment, the server control unit 124 is configured for identifying an owner of the remote device by means of the information element 112 (in particular by means of the information indicative of the identity of the remote device) and providing to the owner of the remote device 106 (e.g. to a user device 126 of the owner) a notification element 128 indicative of the geographical location of the remote device 106. According to an embodiment, the notification element 128 includes the geographical location of the remote device 106 or, in another embodiment, includes information by means of which the owner of the remote device 106 is able to derive or retrieve the geographical location of the remote device 106 (or at least the geographical location of the portable device 102).

According to an embodiment, the server device 104 is configured for receiving, by its server control unit 124, a location identification request 130 from the owner of the remote device 106. According to an embodiment, the location identification request 130 is provided by a user device control unit 132 of the user device 126. According to an embodiment, the location identification request 130 comprises or consists of an identifier being indicative of the identity of the remote device 106. According to an embodiment, this identifier of the location identification request 130 is identical to the identifier 109 provided by the remote device 106. At least the identifier of the location identification request 130 and the identifier 109 both identify the remote device 106. According to an embodiment, the location identification request 130 indicates that the location of the remote device identified by the identifier in the location identification request 130 is requested to be determined.

According to an embodiment, the server control unit 124 is configured for storing the identifier of the location identification request 130, indicated at 209, in a server storage device 134 of the server device 104.

According to an embodiment, the server control unit 124 is configured for storing the information element 112 in the server storage device 134. According to an embodiment, the server control unit 124, upon receiving the location identification request 130, searches the server storage device 134 for an entry (e.g. the information element 112), the identifier 109 of which matches the identifier 209 of the location identification request 130. In an embodiment, the server control unit 124 is configured for forwarding the information indicative of the location of the remote device 106 to the user device 126 (e.g. to the user device control unit 132 thereof) of the owner of the remote device 106.

The above described example of notifying the user device 126 of the location of the remote device 106 may be performed without providing a specific request to the portable device 102. For example, in accordance with an embodiment, the portable device 102 may be configured for continuously scanning its wireless channels for transmissions of remote devices such as the remote device 106 and, in response to receipt of such a transmission containing an identifier 109 of the remote device, to provide the respective information element 112 to the server device 104 (e.g. to the server control unit 124 thereof). However, this approach requires a large amount of wireless resources since any remote device 106 is reported to the server device 104.

Accordingly, in order to reduce the amount of wireless resources necessary to implement embodiments of the herein disclosed subject matter, according to an embodiment the server device 104 is configured for storing the identifier 209, provided with the location identification request 130, in the server storage device 134 of the server device 104. Further according to an embodiment, the server control unit 124 is configured for retrieving from the server storage device 134 a list of lost remote devices, indicated at 136, and providing the same to the portable device 102 (e.g. to the device control unit 108 thereof). In accordance with an embodiment, the portable device 102 comprises a storage device 139 and the device control unit 108 is configured for storing the list of remote device 136 in the storage device 139 from which the list is retrievable by the device control unit 108, e.g. for purposes described herein. According to a further embodiment, the device control unit 108 is configured for receiving from the remote device 106 a lost device information element 141 indicating that the remote device 106 has been lost by its owner.

In accordance with an embodiment, the portable device 102 (or, more particularly the device control unit 108 thereof) is configured for providing an information element 112 to the server device 104 only if an identifier 209 in the list of lost remote devices 136 matches the identifier 109 provided by the remote device 106 and/or if the lost device information element 141 indicates that the remote device 106 has been lost.

According to an embodiment, the portable device 102 (e.g. its device control unit 108) has defined specific instants in time at which information elements (e.g. the information element 112) are provided to the server device 104. This may reduce the traffic required the information elements to the server device. According to another embodiment, providing the information element 112 to the server device 104 is triggered by the receipt of the respective identifier 109, i.e. the information element is provided with a minimum delay after receipt of the respective identifier.

According to an embodiment, the portable device 102 and in particular the device control unit 108 is configured for providing to the server device 104 a finder identification information 143 indicative of the user of the portable device and/or indicative of the portable device. According to an embodiment, the finder identification information is included in the information element 112. According to an embodiment, the server control unit 124 of the server device 104 is configured for receiving from the portable device 102 the finder identification information. According to a further embodiment, the server control unit 124 is configured for storing the finder identification information 143 and, optionally, also finding information associated with the finder identification information 143 in the server storage device. According to an embodiment, the finding information is based on the information element 112 and is in particular based on the information indicative of the identity of the remote device 106 and/or the information indicative of the geographical location of the remote device 106. The finder identification information 143 allows a finder reward, e.g. an incentive for honest finders.

According to an embodiment, the server control unit 124 is configured for providing to the portable device 102 a contact information element, the contact information element being indicative of contact information 137 of the owner of the remote device 106. In accordance with a further embodiment, the device control unit 108 is configured for receiving the owner contact information 137 which is provided by the contact information element. The device control unit 108 may be further configured for contacting the owner of the remote device 102 by using the owner contact information 137. For example, in an embodiment, the portable device 102 provides, e.g. on a display device 140 of the portable device 102, an activation element 142 (e.g. in the form of a soft switch) which is configured for, when activated by a user of the portable device 102, initiating providing a respective information 144 for the owner directly to the user device 126 (or, more particularly, to the user device control unit 132 of the user device 126). According to an embodiment, the information 144 for the owner is or includes the information element 112. According to a further embodiment, the initiation of providing the respective information 144 comprises establishing a call from the portable device 102 to the user device 126 in order to provide the respective information to the owner. According to an embodiment, the call is anonymous, i.e. not disclosing the identity of the portable device 102 to the user device 126.

According to an embodiment the portable device 102 comprises a processor device 138 for executing program elements in order to provide functionality of the portable device 102. In accordance with an embodiment, the device control unit 108 is realized in software, i.e. by a device control program element being executed by the processor device 138 of the portable device 102. In accordance with a further embodiment, the server device 104 comprises a processor device 238, the user device 126 comprises a processor device 338 and the remote device 106 comprises a processor device 438, wherein in the process of devices 238, 338 and 438 are configured for executing program elements in order to provide the functionality of the respective devices 104, 126, 106.

According to an embodiment, the program element providing the device control unit 108 is installed on the portable device 102 by a network operator, e.g. an operator of a cellular network. According to an embodiment this is performed by over the air (OTA) technology, e.g. via OT a SIM delivery.

According to an embodiment the device control unit 108 enables the portable device to receive an identifier 109 from every remote device 106 within its reach (i.e. within its reach by using the wireless technology used by the remote device 106 for sending the identifier to the portable device 102.

Further, although some embodiments refer to an "information element", it should be understood that each of these references is considered to implicitly disclose a respective reference to the general term "information" and vice versa. In particular a single information transmitted between entities (e.g. the portable device 102, the server device 104, the remote device 106 and the user device 126) may, in a respective embodiment, be configured for a transmission in an individual information element. Two or more different informations which are described as to be transmitted by a single information element may, in respective embodiments, be transmitted in individual partial information elements. Further, an information which is described as being transmitted between entities may be transmitted between the entities together with a further information in a single information element.

According to embodiments of the invention, any suitable entity (e.g. components, units and devices) disclosed herein may at least in part be provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices) are not limited to a dedicated entity as described in some embodiments. Rather, the herein disclosed subject matter may be implemented in various ways and with various granularity on device level or software module level while still providing the specified functionality. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein. According to still other embodiments, two or more entities (e.g. part, portion, component, unit, structure or device) are configured for providing together a function as disclosed herein.

According to an embodiment, any device mentioned herein may comprise a processor device including at least one processor for carrying out at least one computer program corresponding to a respective software module.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims. Further, it is noted that the disclosure of providing a piece of information (e.g. the list of lost remote devices) includes "providing the piece of information upon request" or "providing the piece of information without request".

Further, it should be noted that while the exemplary lost item search system in the drawing include a particular combination of several embodiments of the herein disclosed subject matter, any other combination of embodiment is also possible and is considered to be disclosed with this application.

In order to recapitulate some of the above described embodiments of the present invention one can state:

A lost item search system 100 is provided, according to an embodiment including a portable device 102, a server device 104 and a remote device 106. The portable device 102 which may be e.g. a mobile phone, comprises: a device control unit 108 configured for receiving an identifier 109, the identifier 109 being received from a remote device 106, and the identifier 109 being indicative of an identity of the remote device 106; and the device control unit 108 being further configured for outputting an information element 112; the information element 112 being indicative of the identity of the remote device 106; and the information element 112 being indicative of the geographical location of the remote device 106.

## Claims

1. A portable device (102) comprising:
a device control unit (108) configured for receiving an identifier (109), the identifier (109) being received from a remote device (106), and the identifier (109) being indicative of an identity of the remote device (106); and
the device control unit (108) being further configured for outputting an information element (112);
the information element (112) being indicative of the identity of the remote device (106); and
the information element (112) being indicative of the geographical location of the remote device (106).

2. The portable device (102) according to claim 1, further comprising:
a network interface (114) by which the portable device (102) is connectable to a network (116); and
wherein outputting the information element (112) is an outputting of the information element (112) over the network (116).

3. The portable device (102) according to any one of the preceding claims, further comprising:
wherein outputting the information element (112) is an outputting of the information element (112) to a server device (104).

4. The portable device (102) according to any one of the preceding claims,
the information element (112) comprising a location information indicative of the geographical location of the remote device (106); and
the portable device further comprising a location determination unit (118) configured for determining the geographical location information.

5. The portable device (102) according to any one of the preceding claims, further comprising:
an encryption unit (120) configured for encrypting the information element (112) to thereby provide the information element (112) in encrypted form;
wherein outputting the information element (112) is outputting the information element (112) in the encrypted form.

6. The portable device (102) according to any one of the preceding claims, further comprising:
the device control unit (108) being configured for receiving a list of lost remote devices (136); and
a storage device (139) for storing the list of lost remote device (106); and
the device control unit (108) being further configured for outputting the information element (112) only if the remote device (106) is a lost remote devices; and/or
the device control unit being configured for receiving from the remote device a lost device information element indicating that the remote device is lost by its owner; and
the device control unit (108) being further configured for outputting the information element (112) only if the remote device (106) is a lost remote devices.

7. The portable device (102) according to any one of the preceding claims,
the device control unit (108) being configured for receiving owner contact information (137) of an owner of the remote device (106);
the device control unit (108) being configured for contacting the owner of the remote device (106) by using the owner contact information (137).

8. A server device (104) comprising:
a server control unit (124);
the server control unit (124) being further configured for receiving an information element (112) from a portable device (102);
the information element (112) being indicative of the identity of a remote device (106); and
the information element (112) being indicative of a geographical location of the remote device (106);
the server control unit (124) being configured for identifying an owner of the remote device (106) by means of the information element (112) and providing to the owner of the remote device (106) a notification element (128) indicative of the geographical location of the remote device (106).

9. The server device (104) according to claim 8,
the server control unit (124) being configured for receiving from the portable device (102) a finder identification information (143) indicative of the user of the portable device (102) and/or indicative of the portable device (102);
the server device (104) further comprising
a server storage device (134); and
the server control unit (124) configured for storing the finder identification information (143) in the server storage device (134).

10. A remote device (106) comprising:
a transmit unit (110) configured for sending an identifier (109) to a portable device (102), and the identifier (109) being indicative of an identity of the remote device (106);
the transmit unit (110) being configured for sending the identifier (109) to the portable device (102) without authenticating the portable device (102).

11. A method of operating a portable device (102), the method comprising:
receiving from a remote device (106) an identifier (109), the identifier (109) being indicative of an identity of the remote device (106); and
outputting an information element (112);
the information element (112) being indicative of the identity of the remote device (106); and
the information element (112) being indicative of a geographical location of the remote device (106).

12. A method of operating a server device (104), the method comprising:
receiving an information element (112) from a portable device (102);
the information element (112) being indicative of the identity of the remote device (106); and
the information element (112) being indicative of a geographical location of the remote device (106);
identifying an owner of the remote device (106) and providing a notification element (128) indicative of the geographical location of the remote device (106) to the owner of the remote device (106).

13. A method of operating a remote device (106), the method comprising:
sending an identifier (109) to a portable device (102) without authenticating the portable device (102), the identifier (109) being indicative of an identity of the remote device (106).

14. Computer program product in the form of a program element or a computer readable medium, the computer program product being configured for, when executed on a processor device (138), performing the method according to claim 11 or according to claim 12.

15. System comprising a server device according to claims 8 or 9, at least one portable device according to any of claims 1 to 7 and at least one remote device according to claim 10.
